# EUROPÄISCHE PATENTSCHRIFT

(11) **EP 4 347 338 B1**
(45) Veröffentlichungstag und Bekanntmachung des Hinweises auf die Patenterteilung: **30.04.2025**
(21) Anmeldenummer: 22730791.5
(22) Anmeldetag: 25.05.2022
(51) Int. Cl.: B60T 13/74

(54) **ELEKTROMECHANISCHES BREMSSYSTEM FÜR EIN KRAFTFAHRZEUG, VERFAHREN**
ELECTROMECHANICAL BRAKE SYSTEM FOR A MOTOR VEHICLE, METHOD
SYSTEME DE FREINAGE ELECTROMECANIQUE POUR VEHICULE AUTOMOBILE, PROCEDE

(30) Priorität: 01.06.2021 DE 102021205584
(43) Veröffentlichungstag der Anmeldung: 10.04.2024
(73) Patentinhaber: Robert Bosch GmbH, 70442 Stuttgart (DE)
(72) Erfinder: XIE, Fei, 74376 Gemmrigheim (DE)
(86) Internationale Anmeldenummer: PCT/EP2022/064209
(87) Internationale Veröffentlichungsnummer: WO 2022/253667

(56) Entgegenhaltungen:
- US-A- 5 090 518
- US-A1- 2009 223 752
- US-A1- 2020 031 322

## Beschreibung

Die Erfindung betrifft ein elektromechanisches Bremssystem für ein Kraftfahrzeug, mit vier Radbremsvorrichtungen, mit vier primären Elektromotoren, mit vier sekundären Elektromotoren, mit zwei Steuergeräten, und mit einem Backup-Steuergerät.

Weiterhin betrifft die Erfindung ein Verfahren zum Betreiben eines derartigen Bremssystems.

### Stand der Technik

Zur Durchführung von automatisierten Bremsvorgängen, beispielsweise im Rahmen des autonomen Fahrens von Kraftfahrzeugen, muss ein Bremssystem eines Kraftfahrzeugs Aktuatoren aufweisen, die unabhängig von einer Bremspedalbetätigung durch einen Fahrer des Kraftfahrzeugs ansteuerbar sind. Ein derartiges Bremssystem ist beispielsweise als elektromechanisches Bremssystem ausgebildet und verfügt über je eine Radbremsvorrichtung für jedes Rad des Kraftfahrzeugs. Jede dieser Radbremsvorrichtungen wird von einem ihr zugeordneten Elektromotor betätigt, um das Kraftfahrzeug abzubremsen. Zur Ansteuerung der Elektromotoren weist das Bremssystem ein oder mehrere Steuergeräte auf.

Es ist gesetzlich vorgeschrieben, dass Bremssysteme aus Sicherheitsgründen derart aufgebaut sein müssen, dass auch im Fehlerfall, also bei Ausfall einer der Komponenten des Bremssystems, das Kraftfahrzeug weiterhin mit einer vorgegebenen Mindestverzögerung gebremst werden kann. Bei hydraulischen Bremssystemen ist zur Notfallbetätigung üblicherweise eine mechanische Kopplung des Bremspedals mit den Radbremsvorrichtungen vorgesehen.

Ist das Bremssystem jedoch als rein elektromechanisches, insbesondere als sogenanntes "Brake-by-Wire"-Bremssystem ausgebildet, bei dem keine mechanische Notfallbetätigung möglich ist, wird die Bremsung im Fehlerfall üblicherweise dadurch sichergestellt, dass Komponenten des Bremssystems redundant verbaut sind und/oder Redundanzfunktionen füreinander übernehmen.

Derartige Bremssysteme mit redundanten Komponenten sind aus dem Stand der Technik bekannt. So offenbart beispielsweise die Offenlegungsschrift EP 3 318 458 B1 eine elektrische Bremsvorrichtung für ein Kraftfahrzeug mit drei Steuereinheiten, wobei jede der Steuereinheiten jeweils zwei Bremsmechanismen zum Bremsen von zwei Rädern steuert, und wobei bei einem Ausfall einer oder zwei der Steuereinheiten zumindest eine der anderen Steuereinheiten die jeweiligen Bremsmechanismen der ausgefallenen Steuereinheit ansteuert, sodass das Kraftfahrzeug weiterhin gebremst werden kann. Insbesondere sind zwei der Steuereinheiten als Diagonalradsteuereinheiten, die dritte als Vorderradsteuereinheit ausgebildet. Alternativ ist es vorgesehen, die Steuereinheiten derart auszubilden, dass sie jeweils alle vier Bremsmechanismen ansteuern können. Eine Redundanz für die Bremsmechanismen selbst ist jedoch nicht vorgesehen, sodass bei Ausfall eines der Bremsmechanismen die Bremsleistung des Kraftfahrzeugs verringert ist.

Ferner ist aus der US 2009/223752 A1 ein elektromechanisches Bremssystem für ein Kraftfahrzeug bekannt, mit vier Radbremsvorrichtungen, mit vier primären Elektromotoren, mit vier sekundären Elektromotoren und mit zwei Steuergeräten, wobei die Steuergeräte zur Erfassung und/oder Auswertung von Sensordaten von den Radbremsvorrichtungen und/oder dem Kraftfahrzeug zugeordneten Sensoren ausgebildet sind, und wobei jeder der Radbremsvorrichtungen jeweils einer der primären Elektromotoren und einer der sekundären Elektromotoren jeweils zur Betätigung der jeweiligen Radbremsvorrichtungen zugeordnet ist.

### Offenbarung der Erfindung

Das erfindungsgemäße Bremssystem mit den Merkmalen des Anspruchs 1 zeichnet sich dadurch aus, dass die Steuergeräte und/oder das Backup-Steuergerät zur Erfassung und/oder Auswertung von Sensordaten von den Radbremsvorrichtungen und/oder dem Kraftfahrzeug zugeordneten Sensoren ausgebildet sind, dass jeder der Radbremsvorrichtungen jeweils einer der primären Elektromotoren und einer der sekundären Elektromotoren jeweils zur Betätigung der jeweiligen Radbremsvorrichtungen zugeordnet ist, und dass jedes der Steuergeräte jeweils zwei der primären Elektromotoren von zwei der Radbremsvorrichtungen und das Backup-Steuergerät den vier sekundären Elektromotoren der Radbremsvorrichtungen zur Ansteuerung der Elektromotoren zugeordnet ist. Dadurch wird eine vorteilhafte Redundanz sowohl für die Betätigung der Bremsvorrichtungen als auch für die Ansteuerung der den Radbremsvorrichtung zugeordneten Elektromotoren erreicht. So sind jeder der Radbremsvorrichtungen eines der Steuergeräte, das Backup-Steuergerät, einer der primären Elektromotoren und einer der sekundären Elektromotoren zugeordnet, sodass die Bremsleistung des Bremssystems auch bei einem Ausfall eines oder mehrerer der Steuergeräte und/oder der Elektromotoren weiterhin vollständig vorhanden ist. Die Elektromotoren sind der jeweiligen Radbremsvorrichtung insbesondere nicht nur funktional zugeordnet, also mit der Bremsvorrichtung wirkverbunden beziehungsweise mechanisch gekoppelt, sondern auch räumlich zugeordnet, also an der jeweiligen Radbremsvorrichtung angeordnet. Jeder der sekundären Elektromotoren stellt eine Redundanz zu einem der primären Elektromotoren dar. Die sekundären Elektromotoren werden also nur verwendet, wenn der jeweilige primäre Elektromotor ausfällt. Es ist insbesondere denkbar, dass die sekundären Elektromotoren derart spezifiziert werden, dass mit ihnen lediglich eine gesetzlich geforderte Mindestverzögerung bei der Bremsung erreicht wird, und insoweit über eine geringere maximale elektrische Leistung und Größe als die primären Elektromotoren verfügen. So wird trotz vorhandener Redundanz vorteilhaft Bauraum gespart. Die Steuergeräte und/oder das Backup-Steuergerät sind den Radbremsvorrichtungen insbesondere lediglich funktional zugeordnet, also mit den Radbremsvorrichtungen signaltechnisch elektrisch verbunden, und an einem beliebigen Ort im Fahrzeug angeordnet, oder jeweils zumindest einer der Radbremsvorrichtungen auch räumlich zugeordnet, also insbesondere an der Radbremsvorrichtung angeordnet. Durch die Zuordnung von Steuergeräten zu jeweils zwei Radbremsvorrichtungen und des Backup-Steuergeräts zu allen vier Radbremsvorrichtungen werden zum Erreichen der vorteilhaften Redundanz nur drei anstatt acht Steuergeräte benötigt, sodass Komplexität und Kosten des Bremssystems gesenkt werden. Durch die Ausbildung der Steuergeräte zur Auswertung und/oder Erfassung von Sensordaten wird vorteilhaft auf weitere, speziell dazu ausgebildete Steuergeräte verzichtet oder eine Redundanz zu derartigen Steuergeräten geschaffen, in dem zumindest einer der Sensoren redundant verbaut und/oder zwei Steuergeräten, insbesondere einem der Steuergeräte und dem Backup-Steuergerät, zugeordnet ist.

Gemäß einer bevorzugten Weiterbildung der Erfindung ist vorgesehen, dass die Sensoren als Rotorlagesensoren, Drehzahlsensoren, Airbagsensoren und/oder Abstandssensoren ausgebildet sind. Durch eine derartige Ausbildung der Sensoren ist vorteilhaft sichergestellt, dass für die Ansteuerung der Elektromotoren relevante Sensordaten von den Steuergeräten direkt erfasst und/oder ausgewertet werden. Sind die Elektromotoren beispielsweise als elektrisch kommentierte Elektromotoren ausgebildet, muss die genaue Winkellage ihrer Rotoren zur Ansteuerung erfasst werden. Erfasst das Steuergerät dies über entsprechende Rotorlagesensoren direkt, so ist eine besonders vorteilhafte, effiziente Ansteuerung der Elektromotoren gewährleistet. Mithilfe von den Rädern des Kraftfahrzeugs zugeordneten Drehzahlsensoren wird die Raddrehzahl ermittelt und kann bei der Bremsung berücksichtigt werden, beispielsweise um vorteilhaft ein Blockieren eines der Räder zu verhindern. Anhand der Sensordaten von Airbagsensoren und/oder Abstandssensoren sind Gefahrensituationen und/oder Unfallsituationen erkennbar, sodass die Steuergeräte bei Bedarf eine Bremsung, insbesondere eine Notfallbremsung, einleiten können. Vorzugsweise ist zumindest einer der Sensoren als radnaher Sensor ausgebildet oder angeordnet, insbesondere als Mikrofon zur Geräuschüberwachung. Dadurch ist ebenfalls eine direkte Erfassung und/oder Auswertung relevanter Sensordaten vorteilhaft sichergestellt.

Gemäß einer bevorzugten Weiterbildung der Erfindung ist vorgesehen, dass die primären Elektromotoren und/oder die sekundären Elektromotoren als elektrisch kommutierte beziehungsweise bürstenlose Elektromotoren ausgebildet sind. Durch die Ausbildung der Elektromotoren als elektrisch kommutierte Elektromotoren ist vorteilhaft sichergestellt, dass die Betätigung der Radbremsvorrichtungen effizient durchgeführt wird. Vorzugsweise sind nur die primären Elektromotoren als elektrisch kommutierte Elektromotoren ausgebildet, und die sekundären Elektromotoren als Gleichstrommotoren, die vorteilhaft bauraumsparend sind. Alternativ sind die primären Elektromotoren und/oder die sekundären Elektromotoren als Drehstrom-Asynchronmotoren ausgebildet. Dadurch sind die Elektromotoren vorteilhaft kostengünstig ausgebildet, insbesondere, weil derartige Motoren keine Rotorlagesensoren zur Erfassung der Winkellage ihrer Rotoren benötigen. Ebenso ist es denkbar, dass jeweils einer der primären Elektromotoren und einer der sekundären Elektromotoren als ein gemeinsamer Elektromotor mit einer primären Motorwicklung und mit einer sekundären Motorwicklung, insbesondere Statorwicklungen, ausgebildet sind, wobei die primäre Motorwicklung und die sekundäre Motorwicklung unabhängig voneinander ansteuerbar sind, und wobei bei Ansteuerung der primären Motorwicklung der Elektromotor als primärer Elektromotor und bei Ansteuerung der sekundären Motorwicklung der Elektromotor als sekundärer Elektromotor verwendet wird. Die Zuordnung der Motorwicklungen zu den Steuergeräten erfolgt analog zu der vorstehend beschriebenen Zuordnung der Elektromotoren zu den Steuergeräten. Dadurch sind die Elektromotoren ebenfalls vorteilhaft kostengünstig ausgebildet, insbesondere, weil so jeweils einer der primären Elektromotoren und einer der sekundären Elektromotoren in einem gemeinsamen Gehäuse mit nur einem Rotor angeordnet sind.

Gemäß einer bevorzugten Weiterbildung der Erfindung ist vorgesehen, dass die Steuergeräte jeweils direkt an einer der Radbremsvorrichtungen angeordnet sind, deren primärem Elektromotor sie zugeordnet sind. Durch eine derartige Anordnung der Steuergeräte ist vorteilhaft sichergestellt, dass die Länge der potentiell fehleranfälligen, elektrischen Leitungen zwischen dem jeweiligen primären Elektromotor und dem Steuergerät minimiert wird, sodass die Zuverlässigkeit der Ansteuerung erhöht ist. Alternativ sind die Steuergeräte und/oder das Backup-Steuergerät in einem geschützten Bereich des Kraftfahrzeugs angeordnet, in dem sie geringeren Temperaturanforderungen und Umwelteinflüssen als in der Nähe der Radbremsvorrichtungen ausgesetzt sind, wo sie weniger robust und damit vorteilhaft kostengünstiger ausgeführt sind.

Gemäß einer bevorzugten Weiterbildung der Erfindung ist vorgesehen, dass die den Steuergeräten jeweils zugeordneten Radbremsvorrichtungen an der gleichen Radachse des Kraftfahrzeugs angeordnet sind. Durch eine derartige Anordnung ist vorteilhaft sichergestellt, dass, selbst wenn eines der Steuergeräte und das Backup-Steuergerät ausfallen, zumindest beide Radbremseinrichtungen an einer der beiden Achsen durch das verbleibende Steuergerät betätigbar sind. Das Bremssystem ist parallel achsweise redundant ausgelegt.

Gemäß einer bevorzugten Weiterbildung der Erfindung ist alternativ vorgesehen, dass die den Steuergeräten jeweils zugeordneten Radbremsvorrichtungen jeweils unterschiedlichen Radachsen des Kraftfahrzeugs zugeordnet und an einander gegenüberliegenden Enden der Radachsen angeordnet sind. Durch eine derartige Zuordnung ist vorteilhaft sichergestellt, dass jedes der Steuergeräte jeweils einen der Elektromotoren an jeder der beiden Achsen ansteuert, und damit, selbst wenn eines der Steuergeräte und das Backup-Steuergerät ausfallen, noch jeweils eine der Radbremseinrichtungen an jeder der beiden Achsen betätigbar ist. Das Bremssystem ist diagonal achsweise redundant ausgelegt.

Das erfindungsgemäße Verfahren mit den Merkmalen des Anspruchs 7 zeichnet sich dadurch aus, dass die Elektromotoren, die Steuergeräte und das Backup-Steuergerät des Bremssystems auf Funktionsfähigkeit überwacht werden, und dass bei Ausfall eines der Elektromotoren, eines der Steuergeräte oder des Backup-Steuergeräts eine Ersatzreaktion ausgelöst wird. Durch das Überwachen auf Funktionsfähigkeit und das Auslösen der Ersatzreaktion ist vorteilhaft sichergestellt, dass ein Ausfall eines der Elektromotoren, eines der Steuergeräte und/oder des Backup-Steuergeräts unverzüglich erkannt werden, und dass die Bremswirkung des Bremssystems weiterhin aufrechterhalten wird.

Gemäß einer bevorzugten Weiterbildung der Erfindung ist vorgesehen, dass bei Ausfall eines der primären Elektromotoren als Ersatzreaktion der der gleichen Radbremsvorrichtung zugeordnete sekundäre Elektromotor angesteuert wird. Durch das Ansteuern des sekundären Elektromotors ist vorteilhaft die Betätigung der Radbremsvorrichtung weiterhin gewährleistet.

Gemäß einer bevorzugten Weiterbildung der Erfindung ist vorgesehen, dass bei Ausfall eines der Steuergeräte als Ersatzreaktion das Backup-Steuergerät angesteuert wird. Durch das Ansteuern des Backup-Steuergeräts ist vorteilhaft die Betätigung aller vier Radbremsvorrichtungen weiterhin gewährleistet.

Gemäß einer bevorzugten Weiterbildung der Erfindung ist vorgesehen, dass als Ersatzreaktion, insbesondere auf einer einem Fahrer des Kraftfahrzeugs zugeordneten Anzeigevorrichtung, eine Warnmeldung ausgegeben wird. Durch das Ausgeben der Warnmeldung ist vorteilhaft sichergestellt, dass der Fahrer über den Ausfall unverzüglich informiert wird und geeignete Maßnahmen ergreifen kann, insbesondere die Fahrt abzubrechen und/oder eine Werkstatt aufzusuchen. Vorzugsweise erfolgt das Ausgeben der Warnmeldung zeitgleich mit einer der vorstehend beschriebenen Ersatzreaktionen, bei denen durch geeignete Ansteuerung des Backup-Steuergeräts und/oder eines der Elektromotoren ein Ausfall eines der Steuergeräte und/oder eines anderen der Elektromotoren kompensiert wird. Wird lediglich der Ausfall eines der sekundären Elektromotoren oder des Backup-Steuergeräts festgestellt, ist insbesondere keine Änderung der Ansteuerung notwendig, sondern das Ausgeben der Warnmeldung ausreichend. Vorzugsweise wird die Warnmeldung in Abhängigkeit von der Relevanz oder Schwere des Ausfalls ausgegeben, beispielsweise unterschiedlich farbig codiert. So würde beispielsweise ein Ausfall eines der sekundären Elektromotoren oder des Backup-Steuergeräts lediglich mit einer gelben Warnlampe angezeigt, während ein Ausfall eines der primären Elektromotoren und/oder eines der Steuergeräte mit einer roten Warnlampe angezeigt würde. Ebenso könnten dem Fahrer vorteilhaft unterschiedliche Handlungsanweisungen ausgegeben werden, beispielsweise eine Aufforderung zum sofortigen Unterbrechen der Fahrt beim Ausfall eines der primären Elektromotoren und/oder eines der Steuergeräte.

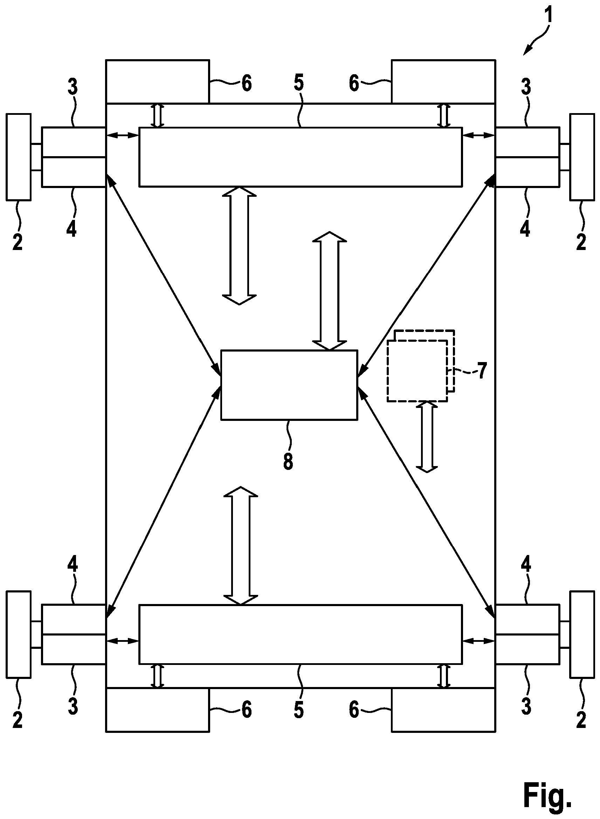

Weitere bevorzugte Merkmale und Merkmalskombinationen ergeben sich aus dem zuvor Beschriebenen sowie aus den Ansprüchen. Im Folgenden wird die Erfindung anhand der Zeichnung näher erläutert. Dazu zeigt die einzige
- Figur: eine schematische Darstellung eines elektromechanischen Bremssystems.

Im Folgenden wird mit Bezug auf die Figur ein vorteilhaftes elektromechanisches Bremssystem 1 für ein nicht näher dargestelltes Kraftfahrzeug beschrieben. Das Bremssystem 1 weist genau vier Radbremsvorrichtungen 2 auf. Jede der Radbremsvorrichtungen 2 ist einem der ebenfalls nicht dargestellten Räder des Kraftfahrzeugs zugeordnet. Das Bremssystem 1 ist im vorliegenden Ausführungsbeispiel rein elektromechanisch ausgeführt, verfügt also über keine hydraulischen Komponenten oder einen Hydraulikflüssigkeitskreislauf zur Betätigung der Radbremsvorrichtungen 2.

Die Bremsung erfolgt vielmehr durch direktes Betätigen der Radbremsvorrichtungen 2, die insbesondere als Reibbremsvorrichtungen ausgebildet sind. Dazu weist das Bremssystem 1 jeweils genau vier primäre Elektromotoren 3 und genau vier sekundäre Elektromotoren 4 auf. Die Elektromotoren 3,4 sind im vorliegenden Ausführungsbeispiel als elektrisch kommutierte Elektromotoren ausgebildet. Jeder der Radbremsvorrichtungen 2 ist jeweils einer der primären Elektromotoren 3 und einer der sekundären Elektromotoren 4 jeweils zur Betätigung der jeweiligen Radbremsvorrichtung 2 zugeordnet.

Außerdem weist das Bremssystem 1 genau zwei Steuergeräte 5 sowie genau ein Backup-Steuergerät 8 auf. Jedes der Steuergeräte 5 ist jeweils zwei der primären Elektromotoren 3 von zwei der Radbremsvorrichtungen 2 und das Backup-Steuergerät 8 den vier sekundären Elektromotoren 4 der Radbremsvorrichtungen 2 zur Ansteuerung der Elektromotoren 3,4 zugeordnet. Die Steuergeräte 5 sind jeweils direkt an einer der Radbremsvorrichtungen 2 angeordnet, deren primärem Elektromotor 3 sie zugeordnet sind.

Jeder der sekundären Elektromotoren 4 übernimmt eine Redundanzfunktion für den der gleichen Radbremsvorrichtung 2 zugeordneten primären Elektromotor 3. Bei Ausfall des entsprechenden primären Elektromotors 3 wird dann der der gleichen Radbremsvorrichtung 2 zugeordnete sekundäre Elektromotor 4 angesteuert.

Ebenso übernimmt das Backup-Steuergerät 8 eine Redundanzfunktion für die Steuergeräte 5. Bei Ausfall eines der Steuergeräte 5 wird dann das Backup-Steuergerät 8 angesteuert.

Die Steuergeräte 5 und/oder das Backup-Steuergerät 8 sind weiterhin zur Erfassung und/oder Auswertung von Sensordaten von den Radbremsvorrichtungen 2 und/oder dem Kraftfahrzeug zugeordneten Sensoren 6 ausgebildet. Bei den Sensoren handelt es sich insbesondere um Rotorlagesensoren eines der Elektromotoren 3,4, um Drehzahlsensoren eines der Räder des Kraftfahrzeugs, um Airbagsensoren des Kraftfahrzeugs und/oder um Abstandssensoren des Kraftfahrzeugs.

Weiterhin sind die Steuergeräte 5 sowie das Backup-Steuergerät 8, wie durch Doppelpfeile angedeutet, kommunikationstechnisch über ein Bussystem, beispielsweise Ethernet, Flexray oder CAN, untereinander sowie mit weiteren Steuergeräten 7 des Kraftfahrzeugs verbunden. Zumindest eines der weiteren Steuergeräte 7 ist beispielsweise dazu ausgebildet, die von den Steuergeräten 5 oder von dem Backup-Steuergerät 8 erfassten beziehungsweise ausgewerteten Sensordaten weiter zu verarbeiten.

Außerdem ist beispielsweise zumindest eines der weiteren Steuergeräte 7 dazu ausgebildet, die Elektromotoren 3,4 sowie die Steuergeräte 5 und das Backup-Steuergerät 8 auf Funktionsfähigkeit zu überwachen, und bei Ausfall eines der Elektromotoren 3,4, eines der Steuergeräte 5 und/oder des Backup-Steuergeräts 8 geeignete Ersatzreaktionen auszulösen, insbesondere die Ansteuerung wie vorstehend beschrieben zu ändern und/oder eine Fehlermeldung auszugeben.

## Patentansprüche

1. Elektromechanisches Bremssystem (1) für ein Kraftfahrzeug, mit vier Radbremsvorrichtungen (2), mit vier primären Elektromotoren (3), mit vier sekundären Elektromotoren (4), mit zwei Steuergeräten (5), und mit einem Backup-Steuergerät (8),
- wobei die Steuergeräte (5) und/oder das Backup-Steuergerät (8) zur Erfassung und/oder Auswertung von Sensordaten von den Radbremsvorrichtungen (2) und/oder dem Kraftfahrzeug zugeordneten Sensoren (6) ausgebildet sind,
- wobei jeder der Radbremsvorrichtungen (2) jeweils einer der primären Elektromotoren (3) und einer der sekundären Elektromotoren (4) jeweils zur Betätigung der jeweiligen Radbremsvorrichtungen (2) zugeordnet ist, und
- wobei jedes der Steuergeräte (5) jeweils zwei der primären Elektromotoren (3) von zwei der Radbremsvorrichtungen (2) und das Backup-Steuergerät (8) den vier sekundären Elektromotoren (4) der Radbremsvorrichtungen (2) zur Ansteuerung der Elektromotoren (3,4) zugeordnet ist.

2. Bremssystem nach Anspruch 1, **dadurch gekennzeichnet, dass** die Sensoren (6) als Rotorlagesensoren, Drehzahlsensoren, Airbagsensoren und/oder Abstandssensoren ausgebildet sind.

3. Bremssystem nach einem der vorhergehenden Ansprüche, **dadurch gekennzeichnet, dass** die primären Elektromotoren (3) und/oder die sekundären Elektromotoren (4) als elektrisch kommutierte Elektromotoren ausgebildet sind.

4. Bremssystem nach einem der vorhergehenden Ansprüche, **dadurch gekennzeichnet, dass** die Steuergeräte (5) jeweils direkt an einer der Radbremsvorrichtungen (2) angeordnet sind, deren primärem Elektromotor (3) sie zugeordnet sind.

5. Bremssystem nach einem der vorhergehenden Ansprüche, **dadurch gekennzeichnet, dass** die den Steuergeräten (5) jeweils zugeordneten Radbremsvorrichtungen (2) jeweils an der gleichen Radachse des Kraftfahrzeugs angeordnet sind.

6. Bremssystem nach einem der Ansprüche 1 bis 3, **dadurch gekennzeichnet, dass** die den Steuergeräten (5) jeweils zugeordneten Radbremsvorrichtungen (2) jeweils unterschiedlichen Radachsen des Kraftfahrzeugs zugeordnet und an einander gegenüberliegenden Enden der Radachsen angeordnet sind.

7. Verfahren zum Betreiben eines elektromechanischen Bremssystems (1) nach einem der Ansprüche 1 bis 6, **dadurch gekennzeichnet, dass** die Elektromotoren (3,4), die Steuergeräte (5) und das Backup-Steuergerät (8) des Bremssystems (1) auf Funktionsfähigkeit überwacht werden, und dass bei Ausfall eines der Elektromotoren (3,4), eines der Steuergeräte (5) oder des Backup-Steuergeräts (8) eine Ersatzreaktion ausgelöst wird.

8. Verfahren nach Anspruch 7, **dadurch gekennzeichnet, dass** bei Ausfall eines der primären Elektromotoren (3) als Ersatzreaktion der der gleichen Radbremsvorrichtung (2) zugeordnete sekundäre Elektromotor (4) angesteuert wird.

9. Verfahren nach einem der Ansprüche 7 und 8, **dadurch gekennzeichnet, dass** bei Ausfall eines der Steuergeräte (5) als Ersatzreaktion das Backup-Steuergerät (8) angesteuert wird.

10. Verfahren nach einem der Ansprüche 7 bis 9, **dadurch gekennzeichnet, dass** als Ersatzreaktion, insbesondere auf einer einem Fahrer des Kraftfahrzeugs zugeordneten Anzeigevorrichtung, eine Warnmeldung ausgegeben wird.

## Claims

1. Electromechanical braking system (1) for a motor vehicle, having four wheel braking devices (2), having four primary electric motors (3), having four secondary electric motors (4), having two control units (5), and having a backup control unit (8),
- wherein the control units (5) and/or the backup control unit (8) are designed to capture and/or evaluate sensor data from the wheel braking devices (2) and/or sensors (6) associated with the motor vehicle,
- wherein each of the wheel braking devices (2) is respectively assigned one of the primary electric motors (3) and one of the secondary electric motors (4) in each case for the purpose of actuating the respective wheel braking devices (2), and
- wherein each of the control units (5) is respectively assigned to two of the primary electric motors (3) of two of the wheel braking devices (2) and the backup control unit (8) is assigned to the four secondary electric motors (4) of the wheel braking devices (2) for the purpose of actuating the electric motors (3,4).

2. Braking system according to Claim 1, **characterized in that** the sensors (6) are in the form of rotor position sensors, speed sensors, airbag sensors and/or distance sensors.

3. Braking system according to one of the preceding claims, **characterized in that** the primary electric motors (3) and/or the secondary electric motors (4) are in the form of electrically commutated electric motors.

4. Braking system according to one of the preceding claims, **characterized in that** the control units (5) are each directly arranged on one of the wheel braking devices (2), to the primary electric motor (3) of which they are assigned.

5. Braking system according to one of the preceding claims, **characterized in that** the wheel braking devices (2) respectively assigned to the control units (5) are each arranged on the same wheel axle of the motor vehicle.

6. Braking system according to one of Claims 1 to 3, **characterized in that** the wheel braking devices (2) respectively assigned to the control units (5) are each assigned to different wheel axles of the motor vehicle and are arranged at opposite ends of the wheel axles.

7. Method for operating an electromechanical braking system (1) according to one of Claims 1 to 6, **characterized in that** the electric motors (3,4), the control units (5) and the backup control unit (8) of the braking system (1) are monitored for functionality, and **in that** a substitute response is triggered if one of the electric motors (3,4), one of the control units (5) or the backup control unit (8) fails.

8. Method according to Claim 7, **characterized in that**, if one of the primary electric motors (3) fails, the secondary electric motor (4) assigned to the same wheel braking device (2) is actuated as the substitute response.

9. Method according to either of Claims 7 and 8, **characterized in that** the backup control unit (8) is actuated as the substitute response if one of the control units (5) fails.

10. Method according to one of Claims 7 to 9, **characterized in that** a warning message is output as the substitute response, in particular on a display device assigned to a driver of the motor vehicle.

## Revendications

1. Système de freinage électromécanique (1) pour un véhicule automobile, comprenant quatre dispositifs (2) de freinage de roue, quatre moteurs électriques primaires (3), quatre moteurs électriques secondaires (4), deux appareils de commande (5) et un appareil de commande de secours (8),
- les appareils de commande (5) et/ou l'appareil de commande de secours (8) étant conçus pour enregistrer et/ou analyser des données de capteurs des dispositifs (2) de freinage de roues et/ou des capteurs (6) associés au véhicule,
- à chacun des dispositifs (2) de freinage de roues, un, respectif, des moteurs électriques primaires (3) et un, respectif, des moteurs électriques secondaires (4) étant associé, pour actionner les dispositifs (2) de freinage de roues respectifs, et
- chacun des appareils de commande (5) étant associé à deux des moteurs électriques primaires (3) de deux des dispositifs (2) de freinage de roues et l'appareil de commande de secours (8) étant associé aux quatre moteurs électriques secondaires (4) des dispositifs (2) de freinage de roues pour commander les moteurs électriques (3, 4).

2. Système de freinage selon la revendication 1, **caractérisé en ce que** les capteurs (6) sont conçus sous la forme de capteurs de position de rotor, de capteurs de vitesse de rotation, de capteurs d'airbag et/ou de capteurs de distance.

3. Système de freinage selon l'une des revendications précédentes, **caractérisé en ce que** les moteurs électriques primaires (3) et/ou les moteurs électriques secondaires (4) sont des moteurs électriques à commutation électrique.

4. Système de freinage selon l'une des revendications précédentes, **caractérisé en ce que** les appareils de commande (5) sont agencés chacun directement sur l'un des dispositifs (2) de freinage de roues auquel leur moteur électrique primaire (3) est associé.

5. Système de freinage selon l'une des revendications précédentes, **caractérisé en ce que** les dispositifs (2) de freinage de roues associés aux appareils de commande (5) sont agencés sur le même essieu du véhicule.

6. Système de freinage selon l'une des revendications 1 à 3, **caractérisé en ce que** les dispositifs (2) de freinage de roues associés respectivement aux appareils de commande (5) sont associés respectivement à des essieux de roue différents du véhicule automobile et sont agencés à des extrémités opposées des essieux de roue.

7. Procédé pour faire fonctionner un système de freinage électromécanique (1) selon l'une des revendications 1 à 6, **caractérisé en ce que** le bon fonctionnement des moteurs électriques (3, 4), des appareils de commande (5) et de l'appareil de commande de secours (8) du système de freinage (1) est surveillé, et **en ce qu'**une réaction de substitution est déclenchée en cas de défaillance de l'un des moteurs électriques (3, 4), de l'un des appareils de commande (5) ou de l'appareil de commande de secours (8).

8. Procédé selon la revendication 7, **caractérisé en ce que**, en cas de défaillance de l'un des moteurs électriques primaires (3), le moteur électrique secondaire (4) associé au même dispositif (2) de freinage de roues est commandé en tant que réaction de substitution.

9. Procédé selon l'une des revendications 7 et 8, **caractérisé en ce que**, en cas de défaillance de l'un des appareils de commande (5), l'appareil de commande de secours (8) est activé en tant que réaction de substitution.

10. Procédé selon l'une des revendications 7 à 9, **caractérisé en ce qu'**un message d'avertissement est émis en tant que réaction de substitution, en particulier sur un dispositif d'affichage associé à un conducteur du véhicule automobile.
